Europäisches Patentamt

European Patent Office

Office européen des brevets

(11) Publication number: **0 277 246 B1**

(12) **EUROPEAN PATENT SPECIFICATION**

(45) Date of publication of patent specification: 30.09.92 (51) Int. Cl.⁵: **B01D 53/34**, B01D 47/12, G21F 9/02

(21) Application number: **87904946.8**

(22) Date of filing: **27.07.87**

(86) International application number: **PCT/JP87/00550**

(87) International publication number: **WO 88/00858 (11.02.88 88/04)**

(54) **WET-PROCESS STACK GAS PURIFICATION METHOD AND APPARATUS.**

(30) Priority: **31.07.86 JP 178752/86**

(43) Date of publication of application:
**10.08.88 Bulletin 88/32**

(45) Publication of the grant of the patent:
**30.09.92 Bulletin 92/40**

(84) Designated Contracting States:
**DE FR GB IT**

(56) References cited:
| | |
|---|---|
| DE-A- 2 740 039 | DE-A- 3 205 536 |
| FR-A- 2 247 272 | GB-A- 2 165 466 |
| JP-A- 5 066 478 | JP-A-52 104 466 |
| JP-A-52 109 485 | JP-A-59 105 819 |
| JP-U- 5 535 940 | JP-U-48 110 444 |
| US-A- 4 312 646 | |

(73) Proprietor: **Chiyoda Chemical Engineering & Construction Company Limited**
**12-1, 2-chome Tsurumi-cho Tsurumi-ku**
**Yokohama-shi Kanagawa-ken(JP)**

(72) Inventor: **WAKUI, Hitoshi**
**4-73-17, Tomioka Nishi Kanazawa-ku**
**Yokohama-shi Kanagawa-ken 236(JP)**
Inventor: **KIYOHARA, Nobuo**
**Lapole Tsurumi 306 1-18-1, Shitanoyacho**
**Tsurumi-ku Yokohama-shi Kanagawa-ken 230(JP)**
Inventor: **NISHINO, Haruo**
**2-34-5, Kami Asou Asou-ku**
**Kawasaki-shi Kanagawa-ken 215(JP)**
Inventor: **YAMAMOTO, Osamu**
**1-7-17, Shiboku Miyamae-ku**
**Kawasaki-shi Kanagawa-ken 213(JP)**

(74) Representative: **Miller, Joseph et al**
**J. MILLER & CO. 34 Bedford Row, Holborn**
**London WC1R 4JH(GB)**

## Description

The present invention relates to a method of and apparatus for purification of stack gas, and more specifically, a purification method and apparatus which are particularly useful in cases where an extremely high effect of decontamination should be attained as in for example decontamination of stack gas from a radioactive waste incinerator.

Conventionally known methods of the treatment and disposal of stack gas from radioactive waste incinerators are dry-processes utilizing a ceramic filter for example and wet-processes utilizing a venturi scrubber for example.

In order to attain a high decontamination factor according to such known methods, usually it is arranged to repeatedly effect a decontamination treatment. As a result of this, it is required to provide a large scale installation and accordingly a large scale building, whereby the installation cost has been expensive in the prior art.

With the dry-processes, moreover, although they are effective in capturing solids, they are almost ineffective in removing gaseous harmful substances and volatile matters, for example iodine.

An object of the present invention is to provide a method and apparatus by means of which radioactive solids, gaseous harmful substances and volatiles can be removed at the same time and nevertheless a considerable reduction in the size of the installation can be realized while, in the light of the decontamination factor, an effect can be produced which is comparable to that of a 3- or more-stage wash-treatment method in the prior art.

In FR-A-2,247,272, there is disclosed a wet-process stack gas purification method by which dust and other contaminants contained in stack gas are removed by contacting the stack gas with a scrubbing liquid, the said method comprising the steps of scrubbing the stack gas by bubbling the gas out of a stack-gas introduction pipe into a first scrubbing liquid; further purifying the so scrubbed gas by subjecting it to a second scrubbing liquid in a scrubbing liquid in a scrubbing tower; recycling used first scrubbing liquid into the stack-gas introduction pipe to cool stack gas being sent thereinto; and recycling used second scrubbing liquid into the scrubbing tower.

According to the present invention, there is provided a wet-process stack gas purification method by which dust and other contaminants contained in stack gas are removed by contacting the stack gas with a scrubbing liquid, the said method comprising the steps of scrubbing the stack gas by bubbling the gas out of a stack-gas introduction pipe into a first scrubbing liquid in a first container means and further purifying the so scrubbed gas by subjecting it to a second scrubbing liquid in a scrubbing tower and, optionally, to a third scrubbing liquid; characterised in that there are provided container means for the second/third scrubbing liquid which are separate from the container means for the first scrubbing liquid, and in that the first scrubbing liquid is maintained at a constant liquid level by a liquid level maintaining means, the gas which has been scrubbed by the first scrubbing liquid being subjected to counter-current contact with the second scrubbing liquid, and a portion of the used second or third scrubbing liquid being collected together with the used first scrubbing liquid and recycled to the stack gas introduction pipe for contact with the stack gas, the remainder of the used second scrubbing liquid being recycled into the scrubbing tower.

There may be both the said second scrubbing liquid and a third scrubbing liquid, a portion of the third scrubbing liquid being cycled to the stack-gas introduction pipe, the second scrubbing liquid which has been subjected to the said counter-current contact being recycled to the top of the scrubbing tower without being mixed with the third scrubbing liquid.

Preferably, the said second scrubbing liquid is maintained at a constant fixed level by means of a further liquid level maintaining means.

In one embodiment, the method comprises purifying the stack gas scrubbed by the first scrubbing liquid by bubbling it into a third scrubbing liquid the level of which is maintained constant by second liquid level maintaining means which are disposed in the scrubbing tower, the scrubbing tower having an open lower end disposed below the level of the third scrubbing liquid, and subjecting the stack gas purified by the third scrubbing liquid to counter-current contact with the second scrubbing liquid.

The invention also comprises a wet-process stack gas purification apparatus of the type in which dust and other contaminants contained in stack gas are removed by contacting the stack gas with a scrubbing liquid, the said apparatus comprising: a first scrubbing tank adapted to contain a first scrubbing liquid; a stack-gas introduction pipe extending into the first scrubbing liquid from a position above the level of the first scrubbing liquid and having an open leading end provided with means for dispersing the stack gas into the first scrubbing liquid; a second scrubbing tank for a second/third scrubbing liquid or liquids, the second scrubbing tank comprising a scrubbing tower including a gas-liquid contact part for further purifying the stack gas scrubbed with the first scrubbing liquid by subjecting it to a second scrubbing liquid; first scrubbing liquid recycling conduit means for guiding the used first scrubbing liquid into an upper portion of the stack-gas introduction pipe for spraying of the first scrubbing liquid; and a further conduit means for recycling the used second scrubbing liquid from the scrubbing tower for contact with the stack gas; characterised in that a conduit is provided for guiding a portion of the used second scrubbing liquid or of a third scrubbing liquid into the first scrubbing liquid recycling conduit means, the first scrubbing tank having liquid level maintaining means for maintaining constant the level of the first scrubbing liquid therein, the said liquid level maintaining means communicating with the first scrubbing liquid recycling conduit means, the gas which has been scrubbed by the first scrubbing liquid being subjected to counter-current contact with the second scrubbing liquid.

The apparatus may, moreover, comprise a second scrubbing tank for containing a third scrubbing liquid therein; the scrubbing tower extending into the third scrubbing liquid from a position above the level of this liquid and having an open leading end provided with a gas dispersing means and a liquid level maintaining means for maintaining constant the level of the third scrubbing liquid received inside the second scrubbing tank; the gas-liquid contact part being provided in an upper portion of the scrubbing tower; the used first scrubbing liquid from the liquid level maintaining means of the first scrubbing tank and the used third scrubbing liquid from the liquid level maintaining means of the scrubbing tower being guided into an upper portion of the stack-gas introduction pipe for spraying of the liquid.

There may be a conduit for recycling the used second scrubbing liquid from the bottom of the gas-liquid contact part to the top of the gas-liquid contact part.

There may be a liquid reservoir tank for containing the used first scrubbing liquid from the liquid level maintaining means of the first scrubbing tank and the used third scrubbing liquid from the liquid level maintaining means of the scrubbing tower, the liquid reservoir tank being integral with the first scrubbing tank and the second scrubbing tank.

The invention is illustrated, merely by way of example, in the accompanying drawings, in which:-

Figure 1 is a schematic view, showing an embodiment of the wet-process stack gas purification apparatus according to the present invention;

Figure 2 is a schematic view, showing another embodiment of the wet-process stack gas purification apparatus according to the invention;

Figure 3 is a schematic view, showing still another embodiment of the wet-process stack gas purification apparatus according to the invention; and

Figure 4 shows a flow chart of the wet-process stack gas purification method according to the present invention.

Initially, the invention will be described in connection with the wet-process stack gas purification apparatus in conjunction with embodiments thereof illustrated in the accompanying drawings.

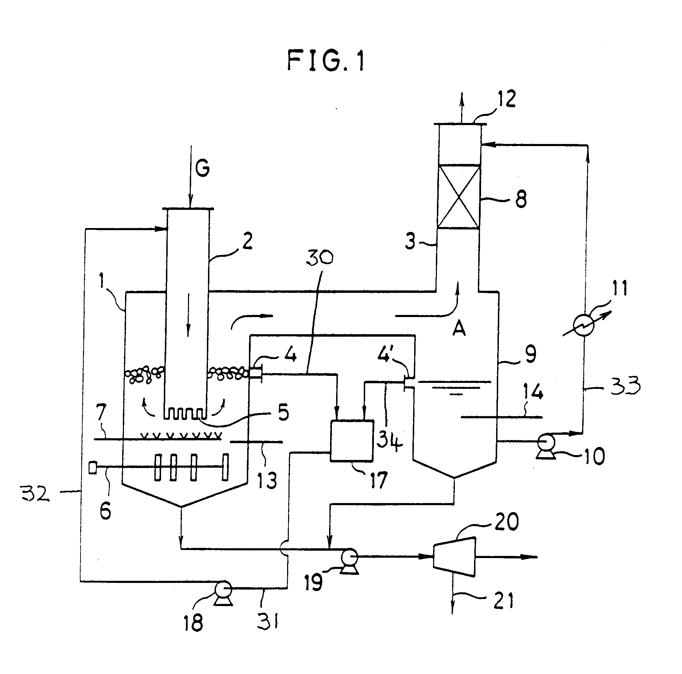

As shown in Figure 1, a wet-process stack gas purification apparatus according to the invention comprises a first scrubbing tank 1, a stack-gas introduction pipe 2 extending in the first scrubbing tank 1 into a scrubbing liquid from a position above the level of this liquid and having an open leading end provided with a gas dispersing means 5, and a scrubbing tower 3 in which to further purify the stack gas scrubbed in the first scrubbing tank 1.

The scrubbing liquid in the first scrubbing tank 1, namely a first scrubbing liquid, may be water. However, where sulfur oxides and so forth are contained in the stack gas to be treated, together with dust, it is desirable to use an aqueous caustic soda solution or a suspension solution or an aqueous solution of calcium hydroxide, magnesium hydroxide or a carbonate thereof so that the sulfur oxides and so forth can be fixed and removed.

In the first scrubbing tank 1, stack gas to be treated is introduced into and bubbled in the first scrubbing liquid, and dust in the gas is removed through contact of bubbles with the first scrubbing liquid.

The extent of the gas-liquid contact is variable depending on how far below the liquid level the open leading end of the stack-gas introduction pipe 2 is positioned.

Accordingly, the first scrubbing tank 1 should necessarily be provided with means for maintaining the liquid level at the prescribed position.

Such liquid-level maintaining means may be any of an arrangement which comprises a weir provided in the tank 1 and in which the liquid is permitted to flow out of the tank over the weir, an arrangement in which a change of the liquid level is detected by a float, a load cell or the like and the quantity of the liquid flowing into or out of the tank is controlled by signals issued responsive to the liquid level detection, and a mechanism as shown in Figure 1 in which a discharge pipe 4 is provided in a side wall portion of the tank 1 to let the liquid flow out of the tank.

The structure of the opening of the stack-gas introduction pipe 2, which is provided with the gas dispersing means 5, may comprise rectangular slits as shown or it may otherwise be any of such structures which can permit gas to be blown into the liquid or, preferably, permit gas to be divided into portions and bubbled into the liquid such as triangular slits, a porous structure and so forth.

In order to promote and more sufficiently effect the gas-liquid contact than merely by bubbling relied on blowing of stack gas out of the gas introduction pipe 2, it is possible to incorporate an agitator 6 below the gas dispersing means 5 of the gas introduction pipe 2.

Moreover, where the stack gas to be treated contains sulfur oxides and so forth, it is also possible to provide an introduction pipe 7 for an oxygen-containing gas, in a bottom portion of the scrubbing tank 1 to promote oxidation of sulfites to sulfates.

The stack gas scrubbed in the first scrubbing tank is guided into the scrubbing tower 3 and further purified therein.

For the scrubbing tower 3, a packed tower or a plate column having a gas-liquid contact member 8 may be effectively utilized. The stack gas that ascends in the direction shown by an arrow A is further purified through counter-current contact with a second scrubbing solution which is sprayed from an upper portion of the scrubbing tower 3 and thereafter discharged through a discharge opening 12.

The second scrubbing liquid which is passed down in the scrubbing tower 3 is collected in a second scrubbing tank 9, recycled into the tower 3 through a cooler 11 by a pump 10 and then sprayed again.

Further, the composition stated above of the first scrubbing liquid is also applicable to the second scrubbing liquid.

The portion of the second scrubbing liquid which is discharged through a discharge pipe 4' is passed through a conduit 34 to a liquid reservoir 17 where it is put together with the portion of the first scrubbing liquid which is discharged through the discharge pipe 4 and which has passed to the liquid reservoir 17 by way of a conduit 30. Liquid from the liquid reservoir 17 passes through a conduit 31 to a pump 18 by which it is recycled through a conduit 32 to the top of the stack-gas introduction pipe 2.

Further, the first scrubbing tank 1 and the second scrubbing tank 9 are provided with scrubbing-liquid supply pipes 13 and 14 respectively.

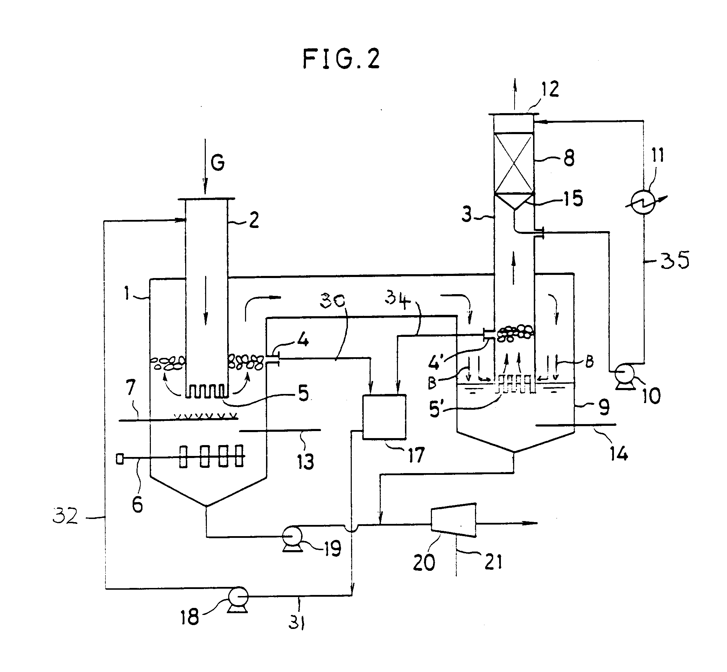

Figure 2 shows another embodiment of the apparatus according to the invention, in which stack gas is scrubbed and purified three times in repetition, and the apparatus of this embodiment differs from the apparatus of Figure 1 in respect of the following.

First, the scrubbing tower 3, like the stack-gas introduction pipe 2, has at its lower end portion an opening 5' provided with a gas dispersing means. The scrubbing tower 3 extends below the level of the third scrubbing liquid in the second scrubbing tank 9 and also extends from above the liquid level. The stack gas scrubbed in the first scrubbing tank 1 is sent into the second scrubbing tank 9, and presses against the third scrubbing liquid as shown by arrows B, whereby the level of the third scrubbing liquid in the second scrubbing tank 9 lowers and, at the same time, the level of the third scrubbing liquid in the scrubbing tower 3 rises to cause the stack gas to bubble out through the opening 5' of the scrubbing tower 3 into the third scrubbing liquid in the scrubbing tower 3.

The scrubbing tower 3 is provided with a discharge pipe 4' for maintaining constant the level of the third scrubbing liquid in the lower part of the scrubbing tower 3.

The scrubbing tower 3 incorporates the same gas-liquid contact member 8 as in the embodiment shown in Figure 1. The second scrubbing liquid used for the gas-liquid contact in this gas-liquid contact member 8 is collected from the bottom of the latter in a scrubbing-liquid collecting part 15 and then recycled into the gas-liquid contact member 8 through a pump 10 and conduit 35, so as to be supplied to the top of the gas-liquid contact member 8.

The portion of the third scrubbing liquid taken out through the discharge pipe 4' at the prescribed liquid level in the scrubbing tower 3 is put together with the portion of the first scrubbing liquid discharged from the discharge pipe 4 and having passed through a pump 18 is put for use for the gas-liquid contact in the stack-gas introduction pipe 2.

The scrubbing liquid subjected to the gas-liquid contact is permitted to flow down in the first scrubbing tank 1 and receives replenishment of water, which was lost as a result of the wetting of the stack gas.

Further, the second scrubbing liquid and the third scrubbing liquid may commonly be water or they may be a solution of the same composition as the first scrubbing liquid.

According to the above described embodiment of Figure 2, the effect of purification can be enhanced without sacrifice to the structural simplicity of the embodiment of Figure 1.

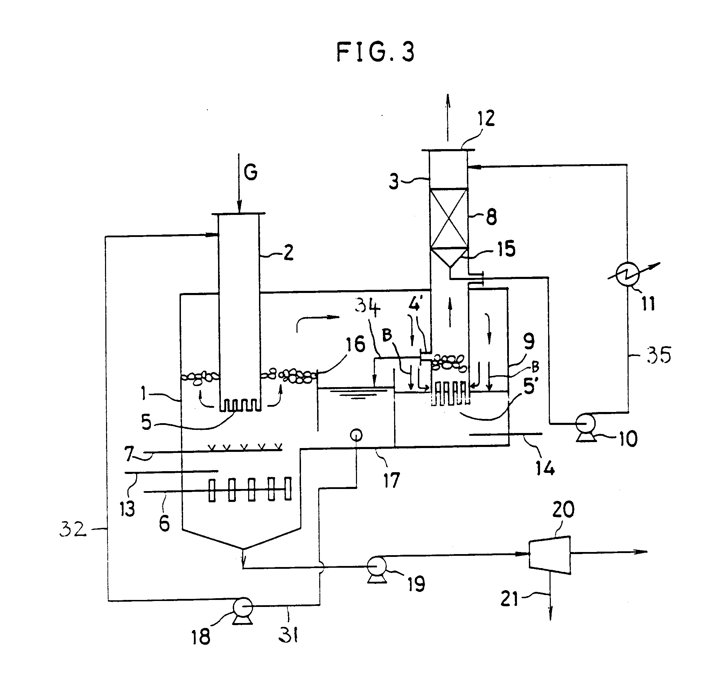

Figure 3 illustrates still another embodiment of the present invention, in which, while the stack gas can be scrubbed three times as in the embodiment of Figure 2, a scaled-down or size-reduced version of the apparatus is achieved by comparison with the embodiment of Figure 2.

That is to say, in the embodiment of Figure 3, the liquid reservoir tank 17 is integrated with each of the first scrubbing tank 1 and the second scrubbing tank 9.

The first scrubbing tank 1 is provided with a weir 16 so that the liquid level in this tank 1 can be maintained constant with the formation of the bubble layer in the tank 1 controlled and, at the same time, the gas-liquid separation can be promoted by the weir 16. The separated portion of the first scrubbing liquid is stored in the liquid reservoir tank 17 and then recycled into the stack-gas introduction pipe 2.

Further, the weir 16 has the function of stabilizing the liquid level in the liquid reservoir tank 17.

According to the above described embodiment of the invention, illustrated in Figure 3, it is possible to achieve a further reduction of the size of the apparatus by comparison with the embodiment shown in Figure 2 while a dust separating capacity comparable to or exceeding that of the apparatus of Figure 2 is retained.

Now, with reference to Figure 3, a description will be given of the operation of the above described stack gas purification apparatus according to the invention.

First, a stack gas G is charged through the gas introduction pipe 2.

The portion of the first scrubbing liquid which was subjected to a gas-liquid separation by the weir 16 and merged in the liquid reservoir tank 17 with the third scrubbing liquid is sent by the pump 18 into the gas introduction pipe 2 and sprayed into the stack gas G introduced into the pipe 2 as described above, whereby the gas G is cooled to a saturation temperature.

From the stack-gas introduction pipe 2, the stack gas is bubbled through the gas dispersing means 5 provided at the lower open end of the pipe 2 into the first scrubbing liquid, and as a result of the gas-liquid contact between minute bubbles of the stack gas and a continuous liquid phase of the first scrubbing liquid, particles such as dust, sulfur oxides and so forth in the stack gas are transferred into the scrubbing liquid and the stack gas is scrubbed.

The so scrubbed stack gas is then bubbled through the gas dispersing means 5' at the lower open end of the scrubbing tower 3 into the third scrubbing liquid in the tower 3 and subjected to a second-time scrubbing through a gas-liquid contact, whereby entrained mist, remaining dust, sulfur oxides and so forth in the stack gas are removed.

Then, the stack gas subjected to the second-time scrubbing as described above is subjected to a counter-current contact with the second scrubbing liquid preparatively cooled by an external cooler 11 and sprayed in the gas-liquid contact member 8 in the scrubbing tower. Accordingly, the gas is cooled and a thorough removal of entrained mist and remaining dust in the gas is effected, the gas which has been scrubbed for the third time being then discharged from the gas discharge opening 12.

The second scrubbing solution is then recycled into the scrubbing tower.

The dust captured in the first scrubbing tank 1 and in the second scrubbing tank 9 is sent by a pump 19 into a centrifugal separator 20, from which the isolated dust 21 is taken out.

Example 1:

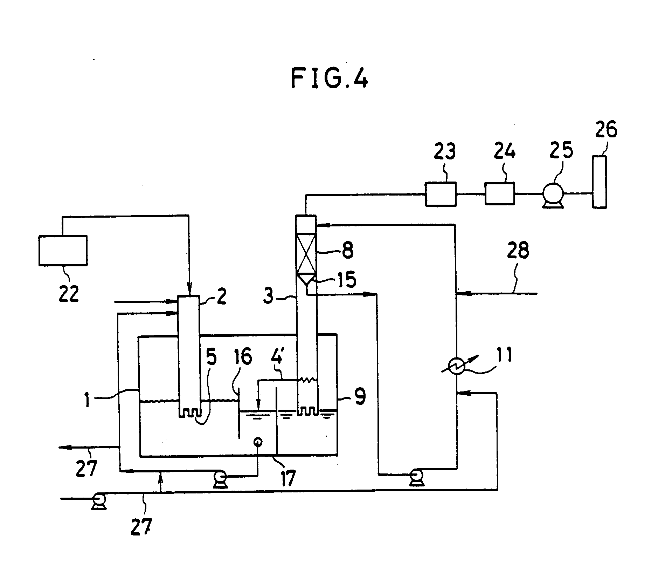

Using a wet-process stack gas purification system as shown in Figure 4, a treatment was carried out of the offgas from an incinerator for radioactive wastes.

The apparatus which was used is substantially the same as the apparatus shown in Figure 3 according to the third embodiment of the present invention.

The offgas generated in an incinerator 22 was guided into the gas introduction pipe 2.

A first scrubbing liquid from the first scrubbing tank 1 was circulated from the liquid reservoir tank 17 and sprayed into the gas introduction pipe 2 to cool the offgas whose temperature was about 1000°C to a saturation temperature of about 70°C.

The so cooled offgas was bubbled through the gas dispersing means 5 provided at the lower open end of the gas introduction pipe 2 into the scrubbing liquid in the first scrubbing tank 1 and subjected to scrubbing.

Then, the offgas produced by a gas-liquid separation by the weir 16 was guided into the second scrubbing tank 9 and bubbled through the gas dispersing means 5' at the lower open end of the scrubbing tower 3 into a third scrubbing liquid in the scrubbing tower 3 and subjected to a second scrubbing.

The offgas subjected to the second scrubbing as described above was further purified by a second scrubbing liquid. The used second scrubbing liquid was captured in the scrubbing-liquid capturing part 15, circulated and sprayed into the top of the gas-liquid contact member 8.

The offgas subjected to scrubbing three times and decontaminated as above was heated by a gas heater 23, passed through a final filter 24 and then released into the air through a suction fan 25 and an exhaust cylinder 26.

Further, the numerals 27 in Figure 4 show piping for charging a neutralizer. The neutralizer was provided so that, since the scrubbing liquids in the first scrubbing tank 1 and in the second scrubbing tank 9 are acidified therein by sulfur oxides and so forth contained in the incinerator offgas, a pH control can be effected by way of supplying an alkali for example caustic soda, magnesium hydroxide or the like.

Also, in order to control to a permissible value each of the amounts of soot and dust to be accumulated and the concentration of salts formed through neutralization of acids in the first scrubbing tank 1, the scrubbing liquid was intermittently discharged through the drainage pipes 27.

Further, the amount of soot and dust in the second scrubbing liquid which was sprayed into the gas-liquid contact part 8, and the concentration of the neutralized salts therein, were maintained constant by the flood flow through the discharge of flood-flow pipe 4'.

The scrubbing liquid discharged through the drainage pipes as above was sent into an incinerator where its contents were incinerated.

Further, the numeral 28 denotes a water supply piping. The supply of water through this piping 28 can be done without if it is arranged that the amount of condensed water to be generated in the gas-liquid contact part 8 is adjusted by controlling the degree of cooling by the cooler 11.

According to the above described Example, the offgas containing 5 g/Nm$^3$ of soot and dust was introduced into the apparatus, and this amount of soot and dust was reduced to below a detection limit value subsequent to the three-time scrubbing.

Example 2:

Using the apparatus shown in Figure 1, the same treatment of gas as in the above described Example 1 was carried out, and it was possible to effect a purification of gas such that 5 g/Nm$^3$ of soot and dust was reduced to 2 mg/Nm$^3$.

Capability of Exploitation in Industry

In or with the wet-process stack gas purification method and apparatus described above, it is possible to effect scrubbing of a stack gas at least twice by a gas-liquid contact between the stack gas and a first scrubbing liquid at the lower open end of a stack-gas introduction pipe provided with a gas dispersing means and by gas-liquid contact between the gas and a second scrubbing liquid in a scrubbing tower.

Accordingly, it is possible to effectively remove dust and so forth contained in stack gas.

The present invention is particularly effectively useful in the treatment and disposal of stack gas from incinerators for radioactive wastes in which it is required to attain an extremely high decontamination effect.

In addition, the apparatus of the present invention may merely comprise a combination together of a first scrubbing tank and a scrubbing tower, and consequently it is possible to achieve a reduction in size of the apparatus.

Also, the carrying out of the present invention does not require any particularly complex operation.

In one emboidment of the wet-process stack gas purification method and apparatus according to the present invention, a stack gas from a radioactive-waste incinerator may for example be treated to attain the following results:

Soot and dust: a decontamination factor at the gas outlet of the gas introduction pipe 2 of 10$^3$ to 10$^4$, and a decontamination factor at the gas outlet of the scrubbing tower 3 of 10$^5$.

Iodine and the like: a decontamination factor at the gas outlet of the scrubbing tower 3 of a value of the order of 10$^3$.

**Claims**

1. A wet-process stack gas purification method by which dust and other contaminants contained in stack gas are removed by contacting the stack gas (G) with a scrubbing liquid, the said method comprising the steps of scrubbing the stack gas (G) by bubbling the gas out of a stack-gas introduction pipe (2) into a first scrubbing liquid in a first container means (1) and further purifying the so scrubbed gas by subjecting it to a second scrubbing liquid in a scrubbing tower (3) and, optionally, to a third scrubbing liquid; characterised in that there are provided container means (9) for the second/third scrubbing liquid which are separate from the container means (1) for the first scrubbing liquid, and in that the first scrubbing liquid is maintained at a constant liquid level by a liquid level maintaining means (4), the gas which has been scrubbed by the first scrubbing liquid being subjected to countercurrent contact with the second scrubbing liquid, and a portion of the used second or third scrubbing liquid being collected together with the used first scrubbing liquid and recycled to the stack gas introduction pipe (2) for contact with the stack gas (G), the remainder of the used second scrubbing liquid being recycled into the scrubbing tower (3).

2. A method as claimed in claim 1 characterised in that there are both the said second scrubbing liquid and a third scrubbing liquid, a portion of the third scrubbing liquid being cycled to the stack-gas introduction pipe (2), the second scrubbing liquid which has been subjected to the said counter-current contact being recycled to the top of the scrubbing tower (3) without being mixed with the third scrubbing liquid.

3. A method as claimed in claim 2 characterised in that the said third scrubbing liquid is maintained at a constant fixed level by means of a further liquid level maintaining means (4').

4. A method of as claimed in claim 1 characterised by purifying the stack gas scrubbed by the first scrubbing liquid by bubbling it into a third scrubbing liquid the level of which is maintained constant by second liquid level maintaining means (4') which are disposed in the scrubbing tower (3), the scrubbing tower (3) having an open lower end (5') disposed below the level of the third scrubbing liquid, and subjecting the stack gas purified by the third scrubbing liquid to counter-current contact with the second scrubbing liquid.

5. A wet-process stack gas purification apparatus of the type in which dust and other contaminants contained in stack gas (G) are removed by contacting the stack gas with a scrubbing liquid, the said apparatus comprising: a first scrubbing tank (1) adapted to contain a first scrubbing liquid; a stack-gas introduction pipe (2) extending into the first scrubbing liquid from a position above the level of the first scrubbing liquid and having an open leading end provided with means (5) for dispersing the stack gas into the first scrubbing liquid; a second scrubbing tank for a second/third scrubbing liquid or liquids, the second scrubbing tank comprising a scrubbing tower (3) including a gas-liquid contact part (8) for further purifying the stack gas (G) scrubbed with the first scrubbing liquid by subjecting it to a second scrubbing liquid; first scrubbing liquid recycling conduit means (17,30-32) for guiding the used first scrubbing liquid into an upper portion of the stack-gas introduction pipe (2) for spraying of the first scrubbing liquid; and a further conduit means (33) for recycling the used second scrubbing liquid from the scrubbing tower (3) for contact with the stack gas; characterised in that a conduit (34) is provided for guiding a portion of the used second scrubbing liquid or of a third scrubbing liquid into the first scrubbing liquid recycling conduit means (17,30-32), the first scrubbing tank (1) having liquid level maintaining means (4) for maintaining constant the level of the first scrubbing liquid therein, the said liquid level maintaining means (4) communicating with the first scrubbing liquid recycling conduit means (17,30-32), the gas which has been scrubbed by the first scrubbing liquid being subjected to counter-current contact with the second scrubbing liquid.

6. An apparatus as claimed in claim 5 characterised in that there is a second scrubbing tank (9) for containing a third scrubbing liquid therein; the scrubbing tower (3) extending into the third scrubbing liquid from a position above the level of this liquid and having an open leading end provided with a gas dispersing means (5') and a liquid level maintaining means (4') for maintaining constant the level of the third scrubbing liquid received inside the second scrubbing tank (9); the gas-liquid contact part (8) being provided in an upper portion of the scrubbing tower (3); the used first scrubbing liquid from the liquid level maintaining means (4) of the first scrubbing tank (1) and the used third scrubbing liquid from the liquid level maintaining means (4') of the scrubbing tower (3) being guided into an upper portion of the stack-gas introduction pipe (2) for spraying of the liquid.

7. An apparatus as claimed in claim 6 comprising a conduit (35) for recycling the used second scrubbing liquid from the bottom of the gas-liquid contact part (8) to the top of the gas-liquid contact part (8).

8. Apparatus as claimed in claim 6 or 7 characterised in that there is a liquid reservoir tank (17) for containing the used first scrubbing liquid from the liquid level maintaining means (16) of the first scrubbing tank (1) and the used third scrubbing liquid from the liquid level maintaining means (4') of the scrubbing tower (3), the liquid reservoir tank (17) being integral with the first scrubbing tank (1) and the second scrubbing tank (9).

**Patentansprüche**

1. Ein Feuchtprozeß-Gichtgasreinigungsverfahren, bei dem Staub und andere Kontaminationen, die in dem Gichtgas enthalten sind, entfernt werden, indem das Gichtgas (G) mit einer Waschlösung in Kontakt gebracht wird, wobei besagtes Verfahren die Verfahrensschritte umfaßt: Waschen des Gichtgases (G) durch Hinaussprudeln des Gases aus einer Gichtgaseinführungsleitung (2) in eine erste Waschflüssigkeit in einer ersten Behältervorrichtung (1) und weiteres Reinigen des so gewaschenen Gases, indem es einer zweiten Waschflüssigkeit in einem Waschturm (3) unterzogen wird und wahlweise einer dritten Waschflüssigkeit; dadurch gekennnzeichnet, daß Behältervorrichtungen (9) für die zweite/dritte Waschflüssigkeit vorgesehen sind, die separat von der Behältervorrichtung (1) für die erste Waschflüssigkeit sind, und daß die erste Waschflüssigkeit auf einem konstanten Flüssigkeitsniveau durch eine Flüssigkeitsniveaubewahrungsvorrichtung (4) gehalten wird, wobei das Gas, das durch die erste Waschflüssigkeit gereinigt worden ist, einem Gegenstromkontakt mit der zweiten Waschflüssigkeit unterzogen wird, und daß ein Teil der benutzten zweiten oder dritten Waschflüssigkeit zusammen mit der benutzten ersten Waschflüssigkeit gesammelt wird und zu der Gichtgas-Einführungsleitung (2) zum Kontakt mit dem Gichtgas (G) zurückgeführt wird, wobei der Rest der verwendeten zweiten Waschflüssigkeit in den Waschturm (3) zurückgeführt wird.

2. Verfahren gemäß Anspruch 1, dadurch gekennzeichnet, daß es beide besagte zweite Waschflüssigkeit und eine dritte Waschflüssigkeit gibt, wobei ein Teil der dritten Waschflüssigkeit zu der Gichtgaseinführungsleitung (2) geführt wird, und die zweite Waschflüssigkeit, die dem besagten Gegenstromkontakt zugeführt wurde, zu dem oberen Teil des Waschturmes (3) rückgeführt wird, ohne daß sie mit der dritten Waschflüssigkeit gemischt wurde.

3. Verfahren gemäß Anspruch 2, dadurch gekennzeichnet, daß besagte dritte Waschflüssigkeit auf einem konstanten festgelegten Niveau mittels eines weiteren Flüssigkeitsniveau bewahrenden Mittel (4') gehalten wird.

4. Verfahren gemäß Anspruch 1, gekennzeichnet durch die Reinigung des durch die erste Waschflüssigkeit gereinigten Gichtgases dadurch, daß es in eine dritte Waschflüssigkeit hineingeblasen wird, wobei das Niveau derselben konstant durch zweite Flüssigkeitsniveau-Bewahrungsmittel (4') konstant gehalten wird, die in dem Waschturm (3) angeordnet sind, wobei der Waschturm (3) ein offenes niedrigeres Ende (5') aufweist, das unter dem Niveau der dritten Waschflüssigkeit angeordnet ist, und dadurch, daß das durch die dritte Waschflüssigkeit gereinigte Gas einem Gegenstromkontakt mit der zweiten Waschflüssigkeit ausgesetzt wird.

5. Eine Feuchtprozeß-Gichtgas-Reinigungsvorrichtung, bei der Staub und andere Kontaminationen, die in dem Gichtgas (G) enthalten sind, dadurch entfernt werden, indem das Gichtgas mit einer Waschflüssigkeit in Berührung gebracht wird, wobei besagte Vorrichtung enthält: Einen ersten Waschtank (1), der zur Aufnahme einer ersten Waschflüssigkeit geeignet ist; eine Gichtgaseinführungsleitung (2), die sich in die erste Waschflüssigkeit von einer Position oberhalb des Niveaus der ersten Waschflüssigkeit erstreckt und die ein offenes führendes Ende aufweist und mit Vorrichtungen (5) zum Verteilen des Gichtgases in der ersten Waschflüssigkeit ausgestattet ist; einen zweiten Waschtank für eine zweite/dritte Waschflüssigkeit oder Flüssigkeiten, wobei der zweite Waschtank einen Waschturm (3) umfaßt, der einen Gas-Flüssigkeitskontaktbereich (8) zur weiteren Reinigung des Gichtgases (G) enthält, das mit der ersten Waschflüssigkeit gewaschen wurde, indem es einer zweiten Waschflüssigkeit unterzogen wird; erste Waschflüssigkeits-Rückführungsleitungsvorrichtungen (17, 30 - 32) zum Leiten der benutzten ersten Waschflüssigkeit in einen oberen Bereich der Gichtgaseinführungsleitung (2) zum Versprühen der ersten Waschflüssigkeit; und eine weitere Leitungsvorrichtung (33) zum Rückführen der benutzten zweiten Waschflüssigkeit von dem Waschturm (3) zum Inberührungkommen mit dem Gichtgas; dadurch gekennzeichnet, daß eine Leitung (34) vorgesehen ist zum Leiten eines Teiles der benutzten zweiten Waschflüssigkeit oder einer dritten Waschflüssigkeit in die ersten Waschflüssigkeit-Rückführungsleitungsvorrichtungen (17, 30 - 32), wobei der erste Waschtank (1) Flüssigkeitsniveaubewahrungsmittel (4) zur Aufrechterhaltung eines konstanten Niveaus der ersten Waschflüssigkeit darin enthält, wobei besagte Flüssigkeitsniveaubewahrungsmittel (4) mit den ersten Waschflüssigkeits-Rückführungsleitungsmitteln (17, 30 - 32) in Verbindung stehen, und daß das Gas, das durch die erste Waschflüssigkeit gewaschen wurde, einem Gegenstromkontakt mit der zweiten Waschflüssigkeit unterzogen wird.

6. Vorrichtung gemäß Anspruch 5, dadurch gekennzeichnet, daß ein zweiter Waschtank (9) zur Aufnahme einer dritten Waschflüssigkeit darin vorgesehen ist; der Waschturm (3) erstreckt sich in die dritte Waschflüssigkeit von einer Position oberhalb des Niveaus dieser Flüssigkeit und hat ein offenes führendes Ende, das mit einer Gasverteilvorrichtung (5') und einer flüssigkeitsniveaubewahrenden Vorrichtung (4') ausgestattet ist, um das Niveau der dritten Waschflüssigkeit konstant zu halten, die in dem zweiten Waschtank (9) aufgenommen wird; der Gas-Flüssigkeitskontaktbereich (8) ist in einem oberen Bereich des Waschturmes (3) vorgesehen; die benutzte erste Waschflüssigkeit von der flüssigkeitsniveauaufrechterhaltenden Vorrichtung (4) des ersten Waschtanks (1) und die benutzte dritte Waschflüssigkeit von der flüssigkeitsniveauaufrechterhaltenden Vorrichtung (4') des Waschturmes (3) werden in einen oberen Bereich der Gichtgaseinführungsleitung (2) geführt, damit die Flüssigkeit versprüht wird.

7. Vorrichtung gemäß Anspruch 6, die eine Leitung (35) zur Rückführung der benutzten zweiten Waschflüssigkeit von dem Boden des Gas-Flüssigkeitskontaktbereiches (8) zu dem oberen Teil des Gas-Flüssigkeitskontaktbereiches (8) umfaßt.

8. Vorrichtung gemäß Anspruch 6 oder 7, dadurch gekennzeichnet, daß ein Flüssigkeitsreservoirtank (17) vorgesehen ist zur Aufnahme der benutzten ersten Waschflüssigkeit von der flüssigkeitsniveauaufrechterhaltenden Vorrichtung (16) des ersten Waschtankes (1) und der verwendeten dritten Waschflüssigkeit von der flüssigkeitsniveauaufrechterhaltenden Vorrichtung (4') des Waschturmes (3), wobei der Flüssigkeitsreservoirtank (17) mit dem ersten Waschtank (1) und dem zweiten Waschtank (9) integriert ist.

**Revendications**

1. Procédé de purification mouillé d'effluents gazeux grâce auquel des poussières et autres produits contaminants contenus dans des effluents gazeux (G) sont retirés en mettant en contact les effluents gazeux (G) avec un liquide nettoyant, ledit procédé comportant les étapes de nettoyage des effluents gazeux (G) en les introduisant sous forme de bulles depuis un conduit d'introduction de gaz (2) dans un premier liquide nettoyant contenu dans un premier moyen conteneur (1) puis en purifiant le gaz ainsi nettoyé par mise en contact du gaz avec un deuxième liquide nettoyant dans une colonne de purification (3) et, de manière optionnelle, en le mettant en contact avec un troisième liquide nettoyant; caractérisé en ce qu'il existe des moyens conteneurs (9) pour les deuxième/troisième liquides nettoyants qui sont séparés du moyen conteneur (1) pour le premier liquide nettoyant, et en ce que le premier liquide nettoyant est maintenu à un niveau de liquide constant grâce à un moyen de maintien du niveau (4), le gaz qui a été nettoyé par le premier liquide nettoyant étant mis en contact à contre-courant avec le deuxième liquide nettoyant, et une partie des deuxième ou troisième liquides nettoyants étant collectée avec le premier liquide nettoyant usé et recyclée dans le conduit d'introduction d'effluents gazeux (2) pour venir en contact avec le gaz (G), le reste du deuxième liquide nettoyant usé étant recyclé dans la colonne de purification (3).

2. Procédé selon la revendication 1, caractérisé en ce qu'on peut utiliser à la fois ledit deuxième liquide nettoyant et un troisième liquide nettoyant, une partie du troisième liquide nettoyant étant recyclée dans le conduit d'introduction d'effluents gazeux (2), le deuxième liquide nettoyant qui a été soumis audit contact à contre-courant étant recyclé sur le dessus de la colonne de purification (3) sans être mélangé au troisième liquide nettoyant.

3. Procédé selon la revendication 2, caractérisé en que ledit troisième liquide nettoyant est maintenu à niveau constant fixe au moyen d'un autre moyen de maintien du niveau de liquide (4').

4. Procédé selon la revendication 1, caractérisé en ce qu'il comporte les étapes de purification des effluents gazeux nettoyés par le premier liquide nettoyant en les introduisant sous forme de bulles dans un troisième liquide nettoyant dont le niveau est maintenu constant par un deuxième moyen de maintien du niveau de liquide (4') qui est disposé dans la colonne de purification (3), cette dernière ayant une extrémité inférieure ouverte (5') disposée en dessous du niveau du troisième liquide nettoyant, et en soumettant les effluents gazeux purifiés par le troisième liquide nettoyant à un contact à contre-courant avec le deuxième liquide nettoyant.

5. Appareil de purification mouillée d'effluents gazeux du type dans lequel des poussières et autres contaminants contenus dans le gaz (G) sont retirés en mettant le gaz en contact avec un liquide nettoyant, ledit appareil comprenant : un premier réservoir de nettoyage (1) conçu pour contenir un premier liquide nettoyant; un conduit d'introduction d'effluents gazeux (2) descendant dans le premier liquide nettoyant depuis une position située au-dessus du niveau du premier liquide nettoyant et pourvu d'une extrémité d'attaque ouverte pourvue de moyens (5) pour disperser les effluents gazeux dans le premier liquide nettoyant; un deuxième réservoir de nettoyage pour un deuxième/troisième liquide(s) nettoyant(s), le deuxième réservoir de nettoyage comprenant une colonne de purification (3) incluant une partie (8) où le gaz et le liquide entrent en contact pour effectuer une purification supplémentaire des effluents gazeux (G) auparavant nettoyés par le premier liquide nettoyant en les soumettant à un deuxième liquide nettoyant; un moyen (17, 30-32) formant conduit de recyclage du premier liquide nettoyant servant à guider le premier liquide nettoyant usé dans une partie supérieure du conduit d'introduction d'effluents gazeux (2) afin de disperser le premier liquide nettoyant ; et un deuxième moyen formant conduit (33) pour recycler le deuxième liquide nettoyant contenu dans la colonne de purification (3) une fois celui-ci entré en contact avec le gaz et usé ; caractérisé en ce qu'un conduit (34) est conçu pour guider une partie du deuxième liquide nettoyant ou d'un troisième liquide usé dans le premier moyen (17, 30-32) formant conduit de recyclage pour le premier liquide nettoyant, le premier réservoir de nettoyage (1) disposant d'un moyen (4) de maintien du niveau de liquide pour maintenir constant le niveau du premier liquide nettoyant contenu dans le réservoir, ledit moyen (4) de maintien du niveau de liquide communiquant avec le moyen (17, 30-32) formant conduit pour le recyclage du premier liquide nettoyant, le gaz qui a été nettoyé par le premier liquide nettoyant étant mis en contact à contre-courant avec le deuxième liquide de nettoyage.

6. Appareil selon la revendication 5, caractérisé en ce qu'il comprend un deuxième réservoir de nettoyage (9) servant à recevoir un troisième liquide nettoyant; la colonne de purification (3) plongeant dans le troisième liquide nettoyant depuis une position située au-dessus du niveau de ce liquide et présentant une extrémité d'attaque ouverte pourvue d'un moyen (5') servant à disperser le gaz et d'un moyen (4') de maintien du niveau de liquide servant à maintenir constant le niveau du troisième liquide nettoyant contenu dans le deuxième réservoir de liquide nettoyant (9); la partie (8) servant à mettre en contact le gaz et le liquide se trouvant dans le haut de la colonne de purification (3); le premier liquide nettoyant usé provenant du moyen (4) de maintien du niveau du premier liquide nettoyant du premier réservoir de nettoyage (1) et le troisième liquide nettoyant usé provenant du moyen (4') de maintien du niveau du liquide nettoyant de la colonne de purification (3) étant guidés dans une partie supérieure du conduit d'introduction d'effluents gazeux (2) pour être dispersés.

7. Appareil selon la revendication 6, disposant d'un conduit (35) de recyclage du deuxième liquide nettoyant usé depuis le fond de la partie (8) servant à mettre en contact le gaz et le liquide jusqu'au dessus de cette même partie (8).

8. Appareil selon la revendication 6 ou 7, caractérisé en ce qu'il comporte un réservoir de liquide (17) pour recevoir le premier liquide nettoyant usé depuis le moyen (16) de maintien du niveau de liquide du réservoir de premier liquide nettoyant (1) et le troisième liquide nettoyant usé depuis le moyen (4') de maintien du niveau de liquide de la colonne de purification (3), le réservoir de liquide (17) faisant partie intégrante du premier (1) et du deuxième (9) réservoirs de liquides nettoyants.

# FIG.1

# FIG.2

# FIG. 3

EP 0 277 246 B1

# FIG.4